# EUROPÄISCHE PATENTSCHRIFT

(11) **EP 2 601 704 B1**
(45) Veröffentlichungstag und Bekanntmachung des Hinweises auf die Patenterteilung: **25.02.2015**
(21) Anmeldenummer: 11746466.9
(22) Anmeldetag: 01.08.2011
(51) Int. Cl.: H01M 10/04, H01M 10/12, B23P 19/00, B23P 19/04, B23P 21/00

(54) **BESTÜCKUNG VON KRAFTFAHRZEUGBATTERIEGEHÄUSEN MIT ELEKTRODENPLATTENSÄTZEN**
ASSEMBLY OF MOTOR VEHICLE BATTERY CONTAINERS WITH ELECTRODE PLATES
ASSEMBLÉE DES COFFRES DE BATTERIE À AUTOMOBILE AVEC PLAQUES D'ÉLECTRODE

(30) Priorität: 04.08.2010 DE 102010033436
(43) Veröffentlichungstag der Anmeldung: 12.06.2013
(73) Patentinhaber: Johnson Controls Autobatterie GmbH & Co. KGaA, 30419 Hannover (DE)
(72) Erfinder: LOER, Roger, 30161 Hannover (DE)
(74) Vertreter: Meissner, Bolte & Partner GbR
(86) Internationale Anmeldenummer: PCT/EP2011/003847
(87) Internationale Veröffentlichungsnummer: WO 2012/016675

(56) Entgegenhaltungen:
- WO-A1-97/44846
- WO-A2-2006/053353
- DE-U1-202009 011 262
- US-A- 3 744 112
- US-A- 4 509 252
- US-A- 5 407 450

## Beschreibung

Die Erfindung betrifft eine Bestückungsstation zur Bestückung von Kraftfahrzeugbatteriegehäusen mit Elektrodenplattensätzen zur Herstellung einer Kraftfahrzeugbatterie gemäß dem Oberbegriff des Anspruchs 1. Die Erfindung betrifft ferner eine Bestückungsanlage mit einer solchen Bestückungsstation gemäß dem Anspruch 10 sowie ein Verfahren zum Bestücken von Kraftfahrzeugbatteriegehäusen mit Elektrodenplattensätzen unter Verwendung einer solchen Bestückungsstation gemäß dem Anspruch 11.

Allgemein betrifft die Erfindung das Gebiet der Bestückung von Kraftfahrzeugbatteriegehäusen mit Elektrodenplattensätzen. Die Fertigung von Kraftfahrzeugbatterien ist heutzutage aus Kosten- und Sicherheitsgründen hoch automatisiert. Zur Ausführung der verschiedenen Bestückungsschritte wird eine Bestückungsanlage verwendet, die in der Regel mehrere Bestückungsstationen aufweist. Eine solche Bestückungsanlage ist z.B. aus der DE 20 2009 011 262 U1 bekannt.

WO 2006/053353 A2 offenbart ebenfalls eine derartige Anlage.

Zur Kosten- und Zeitbedarfsoptimierung bei der Herstellung von Kraftfahrzeugbatterien besteht ein Ziel darin, den Durchsatz der Bestückungsanlage zu optimieren. Zeitkritisch ist beim Betrieb einer solchen Bestückungsanlage insbesondere der letzte Bestückungsschritt, in dem die zuvor in der Bestückungsanlage vorbereiteten Elektrodenplattensätze in das Kraftfahrzeugbatteriegehäuse eingesetzt werden. Das Einsetzen der Elektrodenplattensätze geschieht mit einem deutlichen Kraftaufwand, d.h. die Elektrodenplattensätze müssen in die einzelnen Kammern des Batteriegehäuses eingepresst werden. Dies muss einerseits hoch präzise erfolgen, um Beschädigungen zu vermeiden. Andererseits sind kurze Taktzeiten zur Erzielung eines großen Durchsatzes erwünscht.

Der Erfindung liegt die Aufgabe zugrunde, Möglichkeiten der Bestückung von Kraftfahrzeugbatteriegehäusen mit Elektrodenplattensätzen anzugeben, die ohne Verlust an Herstellungsgüte einen erhöhten Ausstoß von fertigen Produkten erlauben.

Diese Aufgabe wird durch die in den Ansprüchen 1, 10 und 11 angegebene Erfindung gelöst. Vorteilhafte Weiterbildungen der Erfindung sind in den Unteransprüchen angegeben.

In Abkehr von der aus der DE 20 2009 011 262 U1 bekannten Lehre, an der dortigen Bestückungsstation, d.h. der Bearbeitungsstation 4, zum Transport von Batteriegehäusen ein Förderband anzuordnen, schlägt die Erfindung vor, das Bodenteil der Bestückungsstation ohne Fördervorrichtung für das Batteriegehäuse auszubilden. Die Bestückungsstation weist wenigstens einen ersten ausfahrbaren Schieber auf, über den ein Batteriegehäuse wenigstens auf dem Bodenteil horizontal verschiebbar ist, ggf. unter Überwindung der zwischen dem Batteriegehäuse und dem Bodenteil wirkenden Reibungskraft. Zur Verringerung der Reibung können auch freilaufende Rollen oder Schienen vorgesehen sein. Der erforderliche Vorschub des Batteriegehäuses in Horizontalrichtung kann hierdurch durch den ersten ausfahrbaren Schieber durchgeführt werden, was der Schlüssel für eine schnellere und präzisere Bestückung der Batteriegehäuse sowie für die Möglichkeit der Implementierung weiterer Verbesserungsmaßnahmen, die nachfolgend erläutert werden, ist.

Der vorgeschlagene ausfahrbare Schieber hat den Vorteil, dass der Vorschub der Batteriegehäuse anders als bei einem Förderband schlupffrei erfolgen kann, so dass eine präzise Bewegung des Batteriegehäuses und eine genaue Positionierung an einer gewünschten Stelle ermöglicht wird. Ein Förderband würde nämlich keinen definierten Transport der Batteriegehäuse erlauben. Zudem hat die Vermeidung eines Förderbands im Bereich des Bodenteils den Vorteil, dass die bisher erforderlichen aufwendigen Schwerlastrollen entfallen können, die wegen der starken Vertikalbelastung beim Einsetzen der Elektrodenplattensätze bisher erforderlich waren.

Der ausfahrbare Schieber erlaubt zudem, ein Batteriegehäuse schnell, präzise und schonend zu bewegen, da es insbesondere möglich ist, den Schieber mit verschiedenen Vorschubgeschwindigkeiten zu bewegen, z.B. um langsam an ein Batteriegehäuse heranzufahren und nach Kontakt mit dem Batteriegehäuse dieses schnell vor zu bewegen. Ein Vorteil hierbei ist, dass andere Batteriegehäuse auf vor- oder nachgelagerten Förderbändern hiervon nicht beeinflusst werden.

Ein weiterer Vorteil der Verwendung von ausfahrbaren Schiebern als Fördermittel ist, dass z.B. zwei, drei oder vier Schieber in bestimmten Abständen zueinander vorgesehen werden können, so dass eine gleichzeitige Verschiebung mehrerer Batteriegehäuse in gleich bleibendem Abstand zueinander ermöglicht wird. Dies eröffnet neue Möglichkeiten der parallelisierten Bestückung der Batteriegehäuse mit Elektrodenplattensätzen, z.B. derart, dass zwei oder mehrere Bestückungsabschnitte in der Bestückungsstation hintereinander vorgesehen sein und präzise mit Teilen beschickt werden können. Hierdurch kann bei einer Bestückungsanlage der eingangs beschriebenen Art der "Flaschenhals" des Fertigungsschritts des Einsetzens der Elektrodenplattensätze in die Batteriegehäuse durch Parallelfertigung eliminiert werden und insgesamt ein höherer Durchsatz an Batterien in der Bestückungsanlage erzielt werden.

Der ausfahrbare Schieber kann unterschiedlich realisiert sein, z.B. in Form eines horizontal, quer zur Batterieförderrichtung verschiebbaren Arms, in Form eines verschwenkbaren Arms, in Form einer teleskopartigen Anordnung oder als ein über eine 4-Gelenk-Kette betriebenen Arm.

Gemäß einer vorteilhaften Weiterbildung der Erfindung ist ein zweiter Bestückungsabschnitt vorgesehen, in dem eine Bestückung von Batteriegehäusen mit Elektrodenplattensätzen gleichzeitig zu einer Bestückung von Batteriegehäusen mit Elektrodenplattensätzen im ersten Bestückungsabschnitt durchführbar ist. Der zweite Bestückungsabschnitt ist zwischen dem ersten Bestückungsabschnitt und dem Abführabschnitt angeordnet. Vorgesehen ist ferner ein zweiter ausfahrbarer Schieber, der in Verschieberichtung der Batteriegehäuse in einem zumindest im Betrieb der Bestückungsstation festen Abstand zu dem ersten ausfahrbaren Schieber angeordnet ist. Der Abstand zwischen dem ersten und dem zweiten ausfahrbaren Schieber kann selbstverständlich außerhalb des Betriebs der Bestückungsstation veränderbar, d.h. justierbar, sein, um eine Anpassung der Bestückungsstation an unterschiedliche Typen von Batteriegehäusen zu ermöglichen. Gemäß einer vorteilhaften Weiterbildung der Erfindung ist der Abstand zwischen dem ersten und dem zweiten ausfahrbaren Schieber gleich dem Abstand zwischen den Bestückungspositionen des ersten und des zweiten Bestückungsabschnitts. Als Bestückungsposition wird diejenige Position auf den Bodenteil des jeweiligen Bestückungsabschnitts verstanden, an der ein unbestücktes Batteriegehäuse über die Elektrodenplattensatzzuführvorrichtung mit einem Elektrodenplattensatz bestückt wird. Die beschriebene Anordnung des ersten und des zweiten Schiebers ermöglicht ein simultanes paralleles Verschieben zweier Batteriegehäuse von einem Zuführabschnitt in die jeweilige Bestückungsposition des ersten und des zweiten Bestückungsabschnitts. Ebenso ist ein paralleles Abführen bestückter Batteriegehäuse aus dem ersten und dem zweiten Bestückungsabschnitt in dem Abführabschnitt mit dem ersten und dem zweiten Schieber simultan möglich.

Gemäß einer vorteilhaften Weiterbildung der Erfindung sind ein dritter und ein vierter ausfahrbarer Schieber vorgesehen. Der erste und der zweite ausfahrbare Schieber werden dabei für eine Verschiebung von Batteriegehäusen von dem Zuführabschnitt zu der ersten und der zweiten Bestückungsstation eingesetzt. Der dritte und der vierte ausfahrbare Schieber dienen für ein Verschieben bestückter Batteriegehäuse von dem ersten und dem zweiten Bestückungsabschnitt in den Abführabschnitt. Vorteilhaft kann hierdurch ein simultanes Zuführen unbestückter Batteriegehäuse und ein Abführen bestückter Batteriegehäuse durchgeführt werden, was besonders zeitsparend ist und daher einen besonders effektiven, durchsatzerhöhenden Betrieb der Bestückungsanlage erlaubt.

Das beschriebene Prinzip kann selbstverständlich auf weitere ausfahrbare Schieber und weitere Bestückungsabschnitte erweitert werden, um einen noch größeren Durchsatz der Bestückungsanlage zu realisieren.

Gemäß einer vorteilhaften Weiterbildung der Erfindung ist der erste und/oder der zweite ausfahrbare Schieber zur Verschiebung des Batteriegehäuses von dem Zuführabschnitt in dem Bestückungsabschnitt, von dem Bestückungsabschnitt in den Abführabschnitt und/oder zur horizontalen Positionierung eines Batteriegehäuses zumindest in dem Bestückungsabschnitt eingerichtet. Wie erkennbar ist, können die erfindungsgemäßen ausfahrbaren Schieber multifunktional eingesetzt werden.

Gemäß einer vorteilhaften Weiterbildung der Erfindung ist der erste ausfahrbare Schieber zur Verschiebung eines Batteriegehäuses vom Zuführabschnitt in den Bestückungsabschnitt und ein dritter ausfahrbarer Schieber zur Verschiebung eines bestückten Batteriegehäuses vom Bestückungsabschnitt in den Abführabschnitt eingerichtet.

Gemäß einer vorteilhaften Weiterbildung der Erfindung weist der Zuführabschnitt und/oder der Abführabschnitt wenigstens ein Förderband auf. Im Bereich des Förderbands ist wenigstens ein ausfahrbarer Stopper zum definierten Halten eines Batteriegehäuses in einer gewünschten Position vorgesehen. Vorteilhaft können auch mehrere Stopper vorgesehen sein, so dass mehrere Batteriegehäuse in bestimmten gewünschten Positionen gehalten werden können. Hierdurch ist eine Vor- oder Nachpositionierung der Batteriegehäuse außerhalb des Bestückungsabschnitts möglich.

Gemäß einer vorteilhaften Weiterbildung der Erfindung ist das Bodenteil um die Vertikalachse von zugeführten Batteriegehäusen drehbar ausgebildet. Dies erlaubt es vorteilhaft, Batteriegehäuse sozusagen in zwei Fertigungsschritten mit jeweils der Hälfte der erforderlichen Elektrodenplattensätze zu bestücken. So kann in einem ersten Teilschritt eine erste Hälfte von Elektrodenplattensätzen z.B. in geradzahlige Kammern des Batteriegehäuses eingesetzt werden. Sodann wird das Batteriegehäuse um 180° gedreht. Danach wird in einem zweiten Teilschritt die zweite Hälfte der Elektrodenplattensätze in ungeradzahlige Kammern des Batteriegehäuses eingesetzt. Hiernach ist das Batteriegehäuse vollbestückt und kann, gegebenenfalls nach einer weiteren Drehung um 180°, dem Abführabschnitt zugeführt werden.

Gemäß einer vorteilhaften Weiterbildung der Erfindung ist das Bodenteil mit einem Kreis-Rundschalttisch mit einer Schrittweite von 180° verbunden. Dies erlaubt eine einfache und effiziente Verdrehung von Batteriegehäusen auf dem Bodenteil um jeweils genau 180°.

Gemäß einer vorteilhaften Weiterbildung der Erfindung weist der Bestückungsabschnitt im Bereich des Bodenteils wenigstens einen ausfahrbaren Klemmzylinder zur Fixierung eines Batteriegehäuses zwischen dem Klemmzylinder und einem Gegenlager oder zwischen den Klemmzylindern auf. Durch einen solchen Klemmzylinder kann ein Batteriegehäuse insbesondere beim Einsetzen der Elektrodenplattensätze sicher in der gewünschten Position gehalten werden. Vorteilhaft sind die Klemmzylinder außerhalb der Vorschubbewegung der Batteriegehäuse angeordnet, z.B. mit einer Ausfahrrichtung senkrecht zur Verschieberichtung der Batteriegehäuse.

Die Erfindung betrifft ferner eine Bestückungsanlage zur Bestückung und Ausrüstung von Kraftfahrzeugbatteriegehäusen mit wenigstens vier Bearbeitungsstationen, die um einen Hub-/Drehtisch herum angeordnet sind, wobei an einer ersten Bearbeitungsstation unbearbeitete Elektrodenplattensätze zugeführt werden und hinsichtlich ihrer Kontaktfahnen ausgerichtet und gegebenenfalls gebogen werden, wobei an einer zweiten Bearbeitungsstation die Kontaktfahnen mit Flussmittel versehen, verzinkt und gegebenenfalls erneut mit Flussmittel versehen werden, wobei an einer dritten Bearbeitungsstation elektrische Verbindungen zwischen den Elektrodenplatten durch Angießen von Bleiverbindungen hergestellt werden und Polschäfte in einer Gießform angegossen werden, und wobei eine vierte Bearbeitungsstation nach einem der vorhergehenden Ansprüche ausgebildet ist, wobei die Elektrodenplattensätze über den Hub-/Drehtisch von der ersten zur zweiten, hiervon zur dritten und hiervon zur vierten Bearbeitungsstation führbar sind.

Weiterhin betrifft die Erfindung ein Verfahren zum Bestücken von Kraftfahrzeugbatteriegehäusen mit Elektrodenplattensätzen unter Verwendung einer Bestückungsstation der zuvor beschriebenen Art, wobei in dem Verfahren vorgesehen ist, dass der erste ausfahrbare Schieber im eingefahrenen Zustand zunächst bezüglich eines zu verschiebenden Batteriegehäuses positioniert wird, der Schieber dann ausgefahren wird und mit geringer Geschwindigkeit bis zur Berührung eines Batteriegehäuses bewegt wird, dann mit höherer Geschwindigkeit in horizontaler Verschieberichtung des Batteriegehäuses bewegt wird, nach Erreichen der gewünschten Position des Batteriegehäuses gestoppt wird und ggf. dann eingefahren wird.

Die Erfindung wird nachfolgend anhand von Ausführungsbeispielen unter Verwendung von Zeichnungen näher erläutert.

Es zeigen
- Figur 1: - eine Bestückungsanlage und
- Figur 2: - eine Bestückungsstation in Seitenansicht und
- Figuren 3 bis 5: - eine Bestückungsstation in Frontansicht und
- Figuren 6 bis 8: - eine weitere Ausführungsform einer Bestückungsstation in Draufsicht.

In den Figuren werden gleiche Bezugszeichen für einander entsprechende Elemente verwendet.

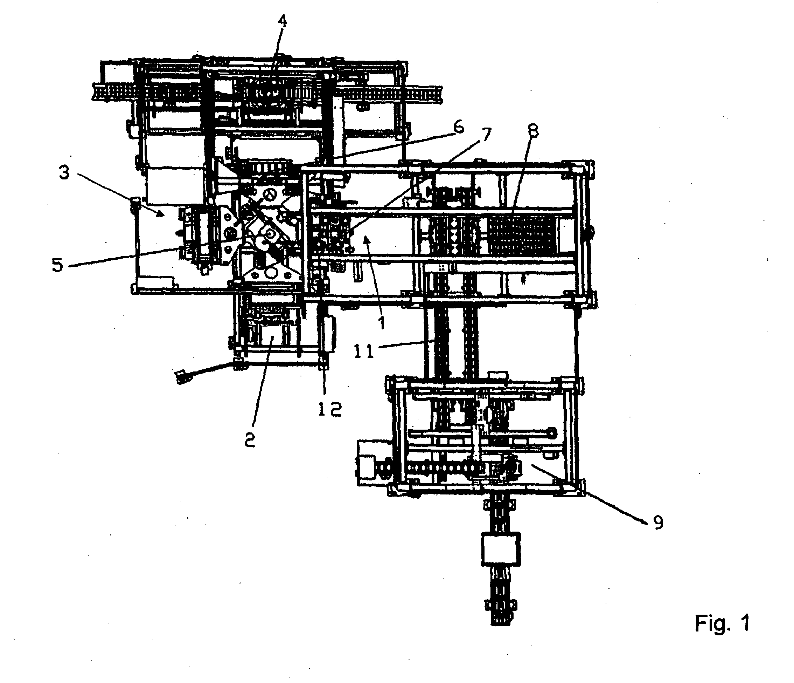

Die Figur 1 zeigt in Draufsicht, d.h. aus der Vogelperspektive, eine Bestückungsanlage zur Bestückung und Ausrüstung von Kraftfahrzeugbatteriegehäusen mit vier Bearbeitungsstationen 1, 2, 3, 4, die um einen Hub-/Drehtisch 5 herum angeordnet sind. Der Hub-/Drehtisch 5 dient dabei unter anderem zur Beförderung der an den Bearbeitungsstationen bearbeiteten Halbzeuge von einer Bearbeitungsstation zur nächsten. Der ersten Bearbeitungsstation 1 vorgeschaltet ist eine Zuführstation für Batterieplattenpakete, die in Spannkassetten 6 angeordnet sind. Die Zuführstation weist unter anderem ein Zuführband 9, ein Pufferband 8 sowie einen Sechsfachgreifer 7 auf. Der Sechsfachgreifer 7 dient zum gleichzeitigen Greifen einer Mehrzahl von zugeführten Batterieplattenpaketen. Vorgesehen ist zudem ein zweites Zuführband 11. Die zugeführten Batterieplattenpakete werden in den Bearbeitungsstationen 1, 2 und 3 nacheinander in der aus der DE 20 2009 011 262 U1 bekannten Weise vorbereitet und dann über den Hub-/Drehtisch 5 einer Elektrodenplattensatzzuführvorrichtung zugeführt, die in der letzten Bearbeitungsstation 4 zum Einsetzen der Elektrodenplattensätze in unbestückte Batteriegehäuse dient. Nachfolgend wird anhand der weiteren Figuren die Funktion der Bestückungsstation 4 beschrieben.

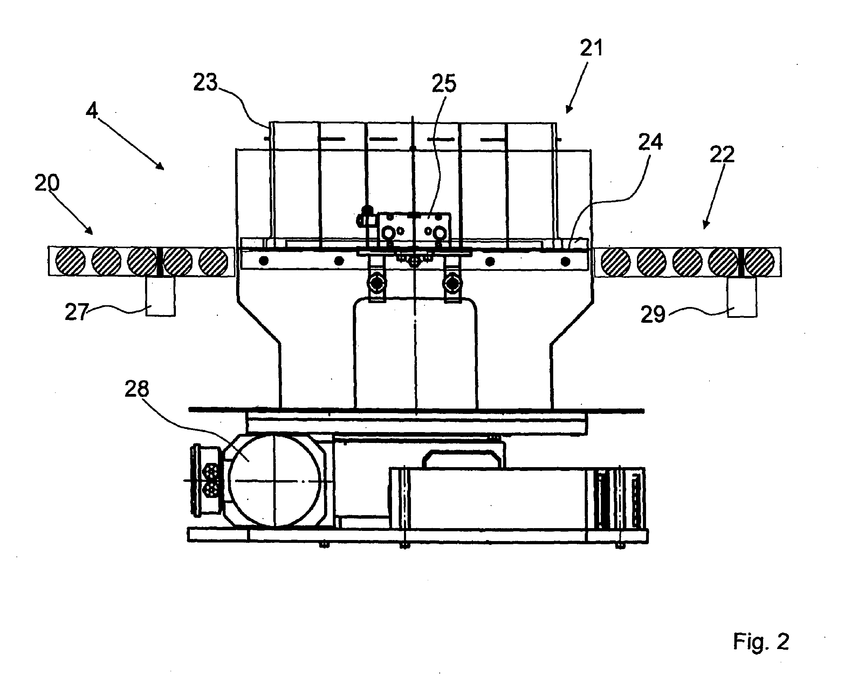

Die Figur 2 zeigt eine erste Ausführungsform der Bestückungsstation 4 in Seitenansicht. Die Vorschubrichtung von Batteriegehäusen verläuft in der Darstellung gemäß Figur 2 von links nach rechts. Die Bestückungsstation 4 weist einen ein Rollenförderband aufweisenden Zuführabschnitt 20, einen Bestückungsabschnitt 21 sowie einen ebenfalls ein Rollenförderband aufweisenden Abführabschnitt 22 auf. Wie erkennbar ist, ist der Bestückungsabschnitt 21 zwischen dem Zuführabschnitt 20 und dem Abführabschnitt 22 angeordnet. Der Bestückungsabschnitt 21 weist ein Bodenteil 24 auf, das über einen Drehantrieb 28 um die Vertikalachse drehbar ist. Erkennbar ist ferner ein unbestücktes Batteriegehäuse 23, das sich auf dem Bodenteil 21 befindet. Zudem ist ein ausfahrbarer Klemmzylinder 25 dargestellt. In der Figur 2 ist zur Vereinfachung der Darstellung noch kein ausfahrbarer Schieber und der damit in Verbindung stehende Mechanismus dargestellt.

Die Figur 2 zeigt zudem einen in dem Zuführabschnitt 20 vorgesehenen ersten ausfahrbaren Stopper 27 und einen in dem Abführabschnitt 22 vorgesehenen zweiten ausfahrbaren Stopper 29. Die ausfahrbaren Stoppen dienen zum Halten eines Batteriegehäuses in einer gewünschten Position. Die ausfahrbaren Stopper können z.B. als Pneumatik-Zylinder ausgebildet sein.

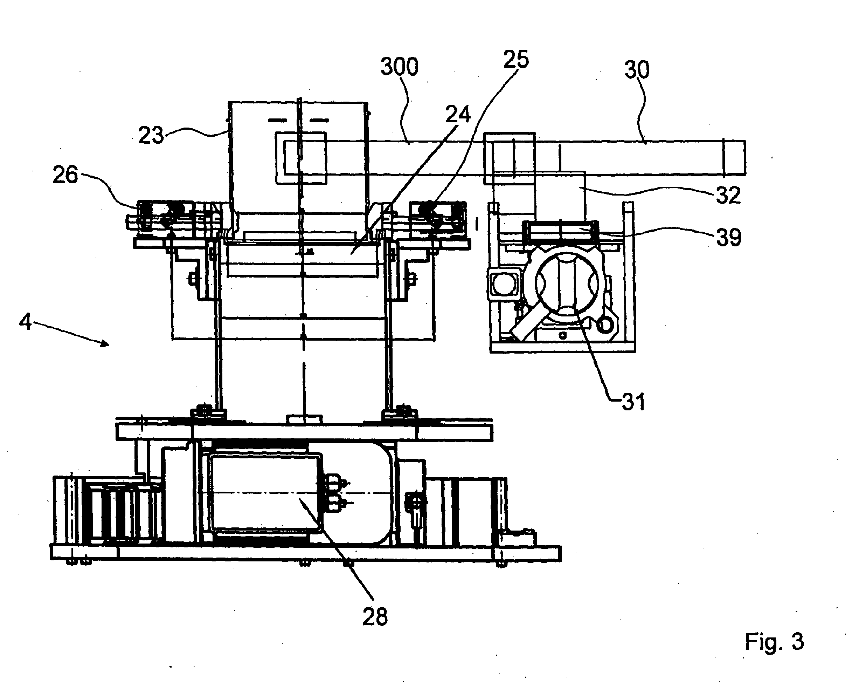

Die Figur 3 zeigt die Bestückungsstation 4 gemäß Figur 2 in Frontansicht, d.h. bezogen auf die Darstellung der Figur 2 in einer Ansicht von links. Gegenüber der Figur 2 ist zusätzlich ein zweiter ausfahrbarer Klemmzylinder 26 erkennbar. Die Klemmzylinder 25, 26 sind an gegenüberliegenden Seiten des Batteriegehäuses 23 angeordnet und in der Figur 3 in der ausgefahrenen Stellung dargestellt, in der das Batteriegehäuse 23 zwischen den Klemmzylindern 25, 26 fixiert ist. Es ist auch möglich, nur einen der Klemmzylinder zum Fixieren des Batteriegehäuses auszufahren. Der andere Klemmzylinder dient dann als Gegenlager. Die ausfahrbaren Klemmzylinder 25, 26 können z.B. pneumatische Zylinder aufweisen.

Die Figur 3 zeigt zusätzlich eine Verschiebemechanik mit einem ersten ausfahrbaren Schieber 30, der über einen Linearantrieb 32 horizontal sozusagen in der Papierebene nach links und rechts beweglich ist. Der erste ausfahrbare Schieber 30 ist zur Verdeutlichung zusätzlich in der ausgefahrenen Stellung dargestellt, was mit dem Bezugszeichen 300 gekennzeichnet ist. Zur Bewegung des ersten ausfahrbaren Schiebers in Verschieberichtung der Batteriegehäuse, in der Darstellung der Figur 3 somit senkrecht zur Papierebene, ist ein Positionierantrieb 31 vorgesehen.

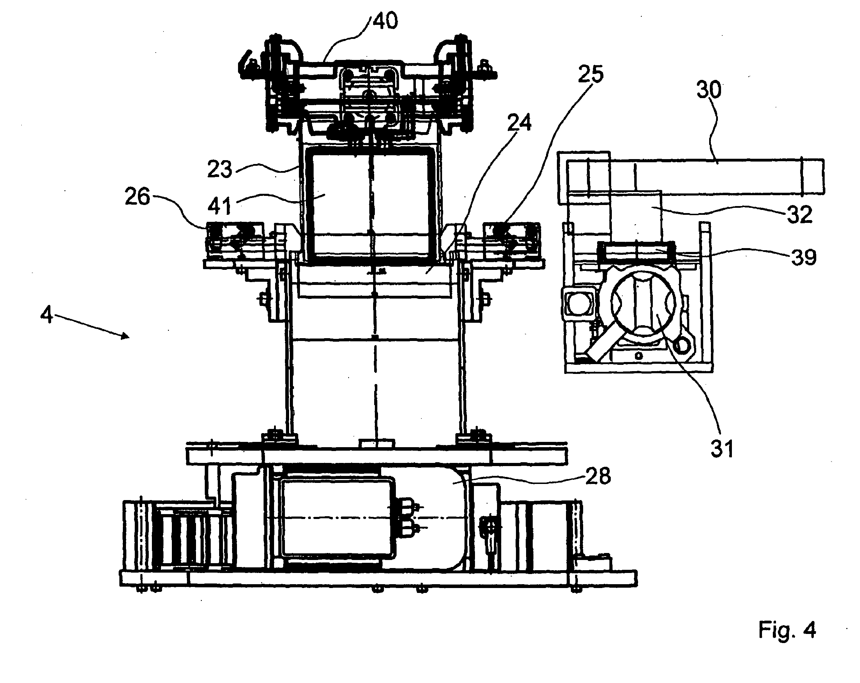

Die Figur 4 zeigt die Bestückungsstation 4 gemäß den Figuren 2 und 3 in der gleichen Ansicht wie in der Figur 3. Wie erkennbar ist, ist der ausfahrbare Schieber 30 in der eingefahrenen Position dargestellt. Erkennbar ist ferner eine Elektrodenplattensatzzuführvorrichtung 40, die von oben auf ein unbestücktes Batteriegehäuse 23 geschwenkt wurde. Hierdurch werden Elektrodenplattensätze 41 in das Batteriegehäuse 23 eingesetzt, wie in der Figur 4 erkennbar ist.

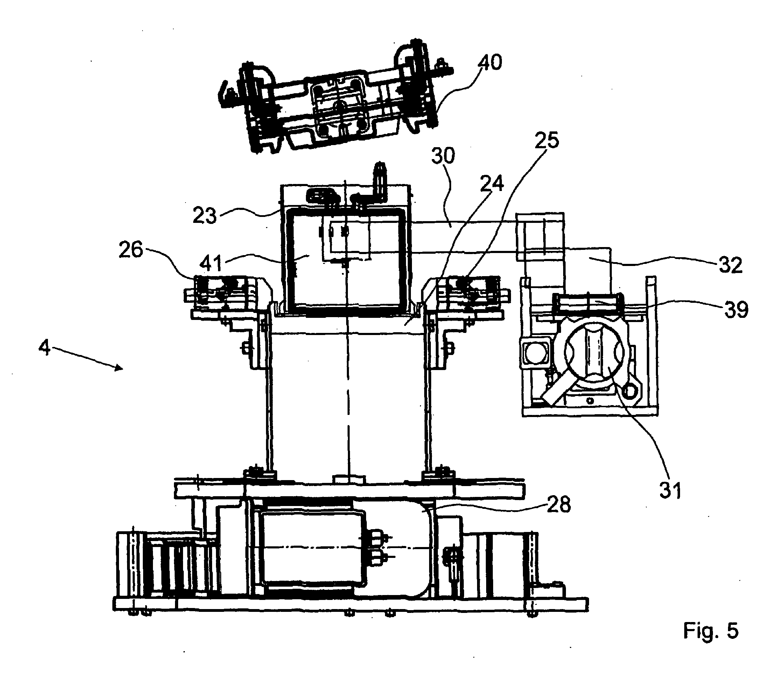

Die Figur 5 zeigt die Bestückungsstation 4 gemäß Figur 4 in einem darauf folgenden Bearbeitungsschritt, bei dem die Elektrodenplattensatzzuführvorrichtung 40 wieder entfernt wird. Das Batteriegehäuse 23 ist nun mit Elektrodenplattensätzen 41 voll bestückt. Entsprechend ist der erste ausfahrbare Schieber 30 nun durch Betätigung des Linearantriebs 32 ausgefahren. Sodann kann durch Betätigung des Positionierantriebs 31 das bestückte Batteriegehäuse 32 von dem Bestückungsabschnitt 21 in den Abführabschnitt 22 verschoben werden.

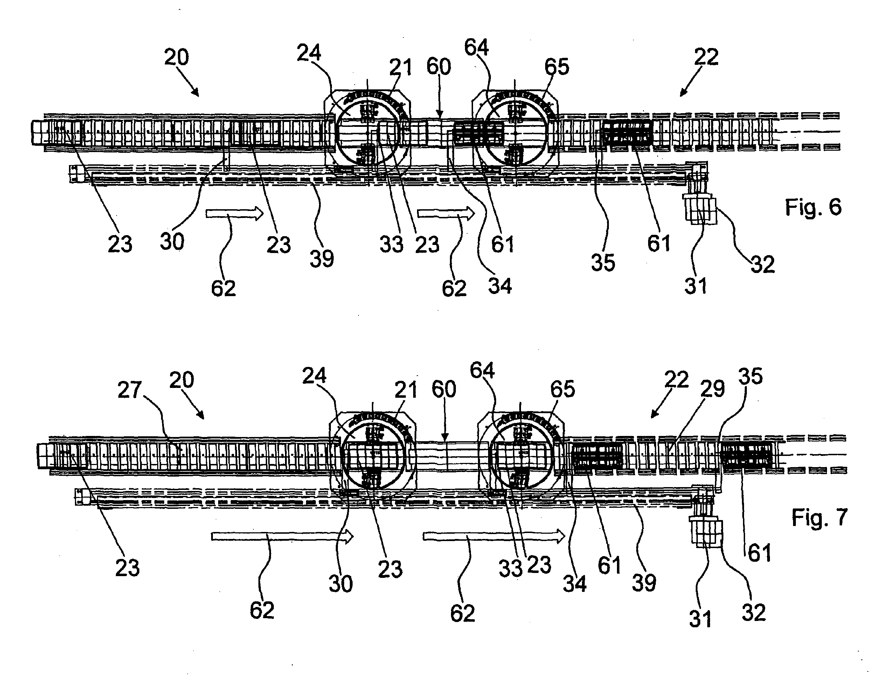

Die Figur 6 zeigt eine weitere Ausführung einer Bestückungsstation 4 wiederum in Draufsicht. Gemäß Figur 6 ist neben einem ersten Bestückungsabschnitt 21 ein zweiter Bestückungsabschnitt 65 vorgesehen. Der zweite Bestückungsabschnitt 65 ist zwischen dem ersten Bestückungsabschnitt 21 und dem Abführabschnitt 22 angeordnet. Zwischen dem ersten und dem zweiten Bestückungsabschnitt 21, 65 ist ein Transferabschnitt 60 vorgesehen, der beispielsweise als Metallplatte ausgebildet sein kann. Der Transferabschnitt 60 kann sehr einfach hergestellt werden und benötigt insbesondere keine eigene Fördervorrichtung für die Batteriegehäuse.

Wie erkennbar ist, ist die Verschiebemechanik mit vier ausfahrbaren Schiebern 30, 33, 34, 35 ausgebildet, die entlang eines Kettenantriebs 39 angeordnet sind. Der Kettenantrieb 39 wird über den Positionierantrieb 31 betrieben, so dass eine Bewegung der Schieber 30, 33, 34, 35 in Verschieberichtung 62 der Batteriegehäuse und zurück erfolgen kann. Zusätzlich können die Schieber 30, 33, 34, 35 über den Linearantrieb 32 eingefahren und ausgefahren werden.

Die Figur 6 zeigt beispielhaft zwei unbestückte Batteriegehäuse 23 in dem Zuführabschnitt 20 sowie ein unbestücktes Batteriegehäuse 23 am Übergang von dem ersten Bestückungsabschnitt 21 zu dem Transferabschnitt 60. Zudem sind zwei bereits bestückte Batteriegehäuse 61 dargestellt. Durch Betätigung der Schieber 30, 33, 34, 35 in Verschieberichtung 62 der Batteriegehäuse werden die an den entsprechenden Schiebern anliegenden Batteriegehäuse 23, 61 gleichzeitig und mit gleich bleibendem Abstand zueinander verschoben. Hierbei werden die unbestückten Batteriegehäuse 23 an die gewünschte Position in dem ersten und dem zweiten Bestückungsabschnitt 21, 65 positioniert. Zugleich werden die bestückten Batteriegehäuse 61 in den Abführabschnitt 22 abgeführt.

Die Figur 7 zeigt die Bestückungsstation 4 gemäß Figur 6 zu einem auf den in der Figur 6 dargestellten Zeitpunkt folgenden Zeitpunkt, zu dem die unbestückten Batteriegehäuse 23 in dem ersten und dem zweiten Bestückungsabschnitt 21, 65 an der gewünschten Stelle positioniert sind. Zudem befinden sich die bestückten Batteriegehäuse 61 in dem Abführabschnitt 22.

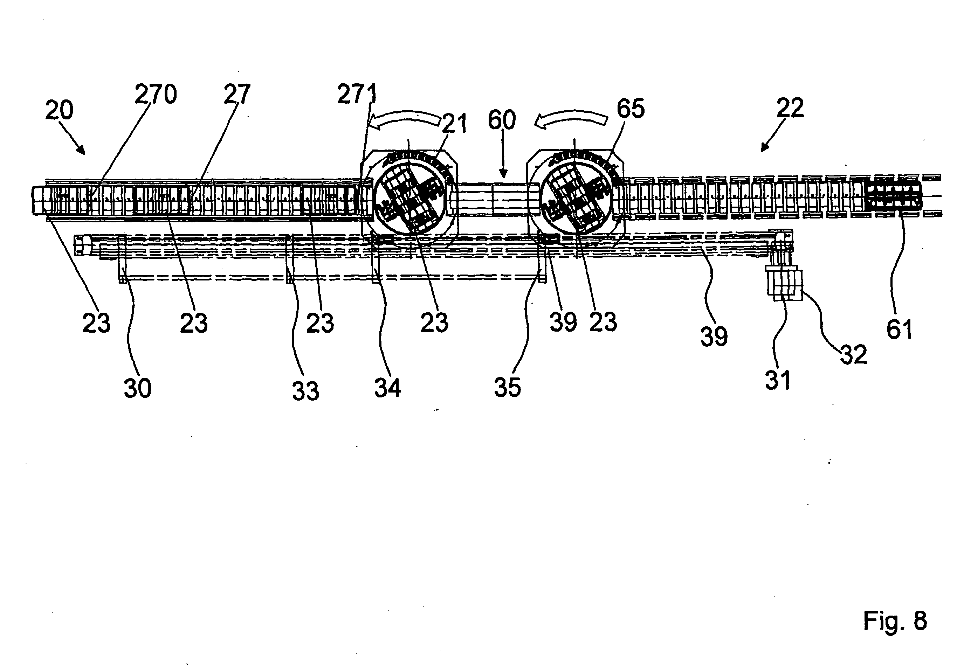

Die Figur 8 zeigt die Bestückungsstation gemäß den Figuren 6 und 7, wobei zusätzlich dargestellt ist, wie halb bestückte Batteriegehäuse 23 durch vertikal drehbaren Bodenteile 24, 64 der ersten und der zweiten Bestückungsstation 21, 65 in eine Position gedreht werden, in der die zweite Hälfte der erforderlichen Elektrodenplattensätze in die Batteriegehäuse eingesetzt wird. Die Figur 8 zeigt außerdem weitere ausfahrbare Stopper 270, 271 im Bereich des Zuführabschnitts 20.

Wie erkennbar ist, eignet sich das erfindungsgemäße Prinzip sowohl für eine Einfachanlage mit nur einem Bestückungsabschnitt als auch für Mehrfachanlagen mit mehreren Bestückungsabschnitten. Das beschriebene Schieberprinzip eignet sich auch für Bestückungsanlagen, bei denen die Batteriegehäuse in einem Schritt komplett bestückt werden, d.h. solchen Anlagen, bei denen kein drehbares Bodenteil vorgesehen ist.

Als Förderband im Zuführabschnitt oder im Abführabschnitt kann beispielsweise ein Rollenförderband, ein Kunststoffgliederband, ein Stahlscharnierband, ein Gurtband oder ähnliche Fördermedien verwendet werden. Vorteilhaft ist die Verwendung von Rollenbändern, wenn besonders kratzempfindliche Batteriegehäuse zu bestücken sind. Bei Rollenbändern können vorteilhaft ausfahrbare Stopper zwischen den Rollen angeordnet werden.

Als Antrieb für den Drehmechanismus des Bodenteils eines Bestückungsabschnitts kann z.B. ein Kreisrundschalttisch mit einer Schrittweite von 180° verwendet werden, insbesondere ein in beiden Drehrichtungen drehbarer Kreisrundschalttisch. Auch andere Antriebe für den Drehmechanismus können vorgesehen werden, wie z.B. ein Getriebemotor, ein Servomotor oder ein pneumatischer Antrieb.

Aufgrund unterschiedlicher, auf der Bestückungsanlage zu fertigender Batterielängen weist der Positionierantrieb 31 die Möglichkeit auf, dass unterschiedliche Positionen, je nach Batterietyp, angefahren werden können. Zum Anfahren einer definierten Position kann z.B. ein Servomotor mit einer Lageregelung vorgesehen sein.

Die anhand der Figuren 6 bis 8 beschriebene Bestückungsstation 4 kann z. B. wie folgt betrieben werden.

Zwei Batteriegehäuse sind auf den Bodenplatten 24, 64 der Bestückungsstationen 21, 65 fertig bestückt und über den vertikalen Drehmechanismus in eine gewünschte Abführposition eingestellt. Auf zwei Bereitstellungsplätzen im Zuführabschnitt 20 befinden sich bereits zwei unbestückte Batteriegehäuse 23. Der Antrieb des Förderbands der Zuführvorrichtung 20 ist zunächst ausgeschaltet. Sodann werden die Stopper 27, 270, 271 der unbestückten Batteriegehäuse abgesenkt, so dass die Batteriegehäuse freigegeben werden. Zudem werden die Klemmzylinder in den Bestückungsabschnitten 21, 65 wieder eingefahren, wodurch die in den Bestückungsstationen 21, 65 vorhandenen zwei fertig bestückten Batteriegehäuse 61 freigegeben werden. Zu diesem Zeitpunkt ist der Antrieb des Förderbands des Abführabschnitts 22 ausgeschaltet. In diesem Bereich sind zudem die Stopper abgesenkt, somit ist der Durchlauf für Batteriegehäuse freigegeben.

Die vier Schieber 30, 33, 34, 35 bewegen sich dann in Verschieberichtung 62, bis sie an den hinteren Enden der Batteriegehäuse anliegen. In diesem Bereich weniger Millimeter vor den Batteriegehäusen werden die Schieber 30, 33, 35, 36 im Schleichgang, d.h. mit sehr geringer Vorschubgeschwindigkeit, in die Verschieberichtung 62 bewegt. Erst nach der Berührung mit den Batteriegehäusen werden die Schieber mit leicht erhöhter Geschwindigkeit in Verschieberichtung 62 bewegt. Hierbei werden die bestückten Batteriegehäuse auf das noch stehende Förderband des Abführabschnitts 22 geschoben, und zwar über die abgesenkten Stopper hinaus. Das hierbei hintere bestückte Batteriegehäuse bleibt dabei vor einem abgesenkten Stopper stehen.

Die Schieber werden sodann eingefahren und entgegen der Verschieberichtung 62 bewegt. Zugleich werden die Stopper im Abführabschnitt 22 in ihre Stoppposition hochgefahren. Der Antrieb des Förderbands im Abführabschnitt 22 wird eingeschaltet. Hierdurch wird das vordere bestückte Batteriegehäuse in Richtung Ausgang der Bestückungsanlage weitergefördert. Das andere bestückte Batteriegehäuse läuft bis zu den Stopper vor. Wenn das vordere bestückte Batteriegehäuse eine Ausgangslichtschranke passiert hat, wird der Stopper abgesenkt. Hierdurch läuft auch das zweite bestückte Batteriegehäuse in Richtung Ausgang der Bestückungsanlage. Nach dem Passieren der Ausgangslichtschranke wird der Antrieb des Förderbands des Abführabschnitts gestoppt.

Die hierbei bereits simultan in die Bestückungsabschnitte 21, 65 verschobenen unbestückten Batteriegehäuse werden durch die Klemmzylinder ausgerichtet und fixiert. Sodann werden die unbestückten Batteriegehäuse über die Elektrodenplattensatzzuführvorrichtung mit Elektrodenplattensätzen bestückt. Von oben wird ein Einbuchsrahmen abgesenkt, der schließlich in die Kammern des Batteriegehäuses eingreift. Durch Spreizen von Einfügeblechen wird das Batteriegehäuse in der richtigen Position positioniert. Hiernach wird das Batteriegehäuse durch die Klemmzylinder fixiert. Die beiden Batteriegehäuse werden mit jeweils drei Elektrodenplattensätzen bestückt. Hiernach wird die Elektrodenplattensatzzuführvorrichtung angehoben, die Batteriegehäuse werden durch die drehbaren Bodenplatten entgegen dem Uhrzeiger um 180° gedreht und über die Elektrodenplattensatzzuführvorrichtung werden nun die noch fehlenden Elektrodenplattensätze in die Batteriegehäuse eingesetzt. Hiernach wird die Elektrodenplattensatzzuführvorrichtung wieder gehoben und die Batteriegehäuse im Uhrzeigersinn um 180° zurückgedreht.

In dem Zuführabschnitt 20 werden die zugeführten unbestückten Batteriegehäuse ebenfalls über die ausfahrbaren Stopper angehalten. Das Förderband des Zuführabschnitts 20 fördert die Batteriegehäuse zunächst bis zu einem der Bestückungsstation 21 nahe gelegenen Stopper. Sofern diese Position bereits mit einem Batteriegehäuse belegt ist, wird ein zweiter in Verschieberichtung 62 davor liegender Stopper ausgefahren, über den ein zweites unbestücktes Batteriegehäuse in einer gewünschten Position gestoppt wird. Hiernach kann der Antrieb des Förderbands des Zuführabschnitts 20 abgeschaltet werden.

Hiernach kann ein neuer Fertigungszyklus von vorn beginnen.

Alternativ kann die beschriebene Bestückungsstation 4 gemäß den Figuren 6 bis 8 auch wie folgt betrieben werden.

Über die ausfahrbaren Schieber 30, 33, 34, 35 werden die Batteriegehäuse nur jeweils schrittweise von dem Zuführabschnitt 20 in den ersten Bestückungsabschnitt 21 und dann in den zweiten Bestückungsabschnitt 65 bewegt und schließlich in den Abführabschnitt 22 verschoben. Es erfolgt somit nicht ein paarweises Einfahren und Ausfahren von Batteriegehäusen in die zwei Bestückungsabschnitte 21, 65, sondern jedes Batteriegehäuse wird in jeden der Bestückungsabschnitte 21, 65 geschoben und dort jeweils teilbestückt. Hierbei wird in dem ersten Bestückungsabschnitt 21 ein erster Teil der Elektrodenplattensätze in das Batteriegehäuse eingesetzt, z.B. indem die geradzahligen Kammern des Batteriegehäuses bestückt werden. In dem zweiten Bestückungsabschnitt wird die zweite Hälfte der Elektrodenplattensätze in das bereits halbbestückte Batteriegehäuse eingesetzt, z.B. indem die ungeradzahligen Kammern des Batteriegehäuses bestückt werden. Entsprechend ist die Elektrodenplattensatzzuführvorrichtung des zweiten Bestückungsabschnitts 65 unterschiedlich zur Elektrodenplattensatzzuführvorrichtung des ersten Bestückungsabschnitts 21 eingerichtet, derart, dass einmal die geradzahligen Kammern und einmal die ungeradzahligen Kammern der Batteriegehäuse bestückt werden. Diese Betriebsart der Bestückungsstation hat den Vorteil, dass die Bestückungsabschnitte 21, 65 konstruktiv einfacher ausgeführt werden und insbesondere kein drehbares Bodenteil 24, 64 erforderlich ist. Zudem ergibt sich eine Beschleunigung bei der Bestückung der Batteriegehäuse, da die Schritte des Drehens der Batteriegehäuse um die Vertikalachse entfallen können.

## Patentansprüche

1. Bestückungsstation (4) zur Bestückung von Kraftfahrzeugbatteriegehäusen (23, 61) mit Elektrodenplattensätzen (41) zur Herstellung einer Kraftfahrzeugbatterie, wobei die Bestückungsstation (4) wenigstens einen Zuführabschnitt (20) für unbestückte Batteriegehäuse (23), wenigstens einen Abführabschnitt (22) für bestückte Batteriegehäuse (61), wenigstens eine Elektrodenplattensatzzuführvorrichtung (40) und wenigstens einen zwischen dem Zuführabschnitt (20) und dem Abführabschnitt (22) angeordneten ersten Bestückungsabschnitt (21) aufweist, in dem mittels der Elektrodenplattensatzzuführvorrichtung (40) zugeführte Elektrodenplattensätze (41) in das Batteriegehäuse (23) eingesetzt werden, wobei der erste Bestückungsabschnitt (21) ein als Lagerfläche für das Batteriegehäuse (23) beim Einsetzvorgang der Elektrodenplattensätze (41) dienendes Bodenteil (24) aufweist, **dadurch gekennzeichnet, dass** das Bodenteil (24) ohne Fördervorrichtung für das Batteriegehäuse (23) ausgebildet ist und die Bestückungsstation (4) wenigstens einen ersten quer zu einer horizontalen Verschieberichtung (62) des Batteriegehäuses (23) ein- und ausfahrbaren Schieber (30) aufweist, über den ein Batteriegehäuse (23) im ausgefahrenen Zustand des ersten Schiebers (30) wenigstens auf dem Bodenteil (24) horizontal verschiebbar ist.

2. Bestückungsstation nach Anspruch 1, **dadurch gekennzeichnet, dass** ein zweiter Bestückungsabschnitt (65) vorgesehen ist, in dem eine Bestückung von Batteriegehäusen (23) mit Elektrodenplattensätzen (41) gleichzeitig zu einer Bestückung von Batteriegehäusen (23) mit Elektrodenplattensätzen (41) in dem ersten Bestückungsabschnitt (21) durchführbar ist, wobei der zweite Bestückungsabschnitt (65) zwischen dem ersten Bestückungsabschnitt (21) und dem Abführabschnitt (22) angeordnet ist, und ein zweiter ausfahrbarer Schieber (23) vorgesehen ist, der in Verschieberichtung (62) der Batteriegehäuse (23) in einem zumindest im Betrieb der Bestückungsstation (4) festen Abstand zu dem ersten ausfahrbaren Schieber (30) angeordnet ist.

3. Bestückungsstation nach Anspruch 2, **dadurch gekennzeichnet, dass** der Abstand zwischen dem ersten und dem zweiten ausfahrbaren Schieber (30, 33) gleich dem Abstand zwischen den Bestückungspositionen des ersten und des zweiten Bestückungsabschnitts (21, 65) ist.

4. Bestückungsstation nach einem der vorhergehenden Ansprüche, **dadurch gekennzeichnet, dass** der erste und/oder der zweite ausfahrbare Schieber (30, 33) zur Verschiebung des Batteriegehäuses (23) von dem Zuführabschnitt (20) in den Bestückungsabschnitt (21), von dem Bestückungsabschnitt (21) in den Abführabschnitt (22) und/oder zur horizontalen Positionierung eines Batteriegehäuses (23) zumindest in dem Bestückungsabschnitt (21) eingerichtet ist.

5. Bestückungsstation nach einem der vorhergehenden Ansprüche, **dadurch gekennzeichnet, dass** der Zuführabschnitt (20) und/oder der Abführabschnitt (22) wenigstens ein Förderband aufweist und im Bereich des Förderbands wenigstens ein ausfahrbarer Stopper (27, 29, 270, 271) zum definierten Halten eines Batteriegehäuses (23) in einer gewünschten Position vorgesehen ist.

6. Bestückungsstation nach einem der vorhergehenden Ansprüche, **dadurch gekennzeichnet, dass** das Bodenteil (24) um die Vertikalachse von zugeführten Batteriegehäusen (23) drehbar ausgebildet ist.

7. Bestückungsstation nach Anspruch 6, **dadurch gekennzeichnet, dass** das Bodenteil (24) mit einem Kreis-Rundschalttisch mit einer Schrittweite von 180° verbunden ist.

8. Bestückungsstation nach einem der vorhergehenden Ansprüche, **dadurch gekennzeichnet, dass** der erste ausfahrbare Schieber (30) zur Verschiebung eines Batteriegehäuses (23) vom Zuführabschnitt (20) in den ersten Bestückungsabschnitt (21) und ein dritter ausfahrbarer Schieber (34) zur Verschiebung eines bestückten Batteriegehäuses (61) vom ersten Bestückungsabschnitt (21) in den Abführabschnitt (22) eingerichtet ist.

9. Bestückungsstation nach einem der vorhergehenden Ansprüche, **dadurch gekennzeichnet, dass** der erste und/oder der zweite Bestückungsabschnitt (21, 65) im Bereich des Bodenteils (24) wenigstens einen ausfahrbaren Klemmzylinder (25, 26) zur Fixierung eines Batteriegehäuses (23) zwischen dem Klemmzylinder (25, 26) und einem Gegenlager oder zwischen den Klemmzylindern (25, 26) aufweist.

10. Bestückungsanlage zur Bestückung und Ausrüstung von Kraftfahrzeugbatteriegehäusen (23, 61) mit wenigstens vier Bearbeitungsstationen (1, 2, 3, 4), die um einen Hub-/Drehtisch (5) herum angeordnet sind, wobei an einer ersten Bearbeitungsstation (1) unbearbeitete Elektrodenplattensätze zugeführt werden und hinsichtlich ihrer Kontaktfahnen ausgerichtet und gegebenenfalls gebogen werden, wobei an einer zweiten Bearbeitungsstation (2) die Kontaktfahnen mit Flussmittel versehen, verzinkt und gegebenenfalls erneut mit Flussmittel versehen werden, wobei an einer dritten Bearbeitungsstation (3) elektrische Verbindungen zwischen den Elektrodenplatten durch Angießen von Bleiverbindungen hergestellt werden und Polschäfte in einer Gießform angegossen werden, und wobei eine vierte Bearbeitungsstation (4) nach einem der vorhergehenden Ansprüche ausgebildet ist, wobei die Elektrodenplattensätze über den Hub-/Drehtisch (5) von der ersten zur zweiten, hiervon zur dritten und hiervon zur vierten Bearbeitungsstation führbar sind.

11. Verfahren zum Bestücken von Kraftfahrzeugbatteriegehäusen (23, 61) mit Elektrodenplattensätzen (40) unter Verwendung einer Bestückungsstation (4) nach einem der Ansprüche 1 bis 9, **dadurch gekennzeichnet, dass** der erste ausfahrbare Schieber (30) im eingefahrenen Zustand zunächst bezüglich eines zu verschiebenden Batteriegehäuses (23) positioniert wird, der Schieber (30) dann ausgefahren wird und mit geringer Geschwindigkeit bis zur Berührung eines Batteriegehäuses (23) bewegt wird, dann mit höherer Geschwindigkeit in horizontaler Verschieberichtung (62) des Batteriegehäuses (23) bewegt wird und nach Erreichen der gewünschten Position des Batteriegehäuses (23) gestoppt wird.

## Claims

1. An equipping station (4) for equipping motor vehicle battery housings (23, 61) with electrode plate sets (41) in order to produce a motor vehicle battery, wherein the equipping station (4) has at least one feed section (20) for unequipped battery housings (23), at least one discharge section (22) for equipped battery housings (61), at least one electrode plate set feeder (40) and at least one first equipping section (21) arranged between the feed section (20) and the discharge section (22) in which electrode plate sets (41) supplied by the electrode plate set feeder (40) are inserted into the battery housing (23), wherein the first equipping section (21) has a base part (24) which serves as a bearing surface for the battery housing (23) during the insertion of the electrode plate sets (41),
**characterized in that**
the base part (24) is formed without a conveyor device for the battery housing (23) and the equipping station (4) has at least one first slider (30) able to be transversely retracted and extended relative to a horizontal displacement direction (62) of the battery housing (23), by means of which a battery housing (23) can be displaced horizontally at least on the base part (24) when the first slider (30) is in the extended state.

2. The equipping station according to claim 1,
**characterized in that**
a second equipping section (65) is provided in which battery housings (23) can be equipped with electrode plate sets (41) simultaneously to battery housings (23) being equipped with electrode plate sets (41) in the first equipping section (21), wherein the second equipping section (65) is arranged between the first equipping section (21) and the discharge section (22), and a second extendable slider (23) is provided which is arranged in the displacement direction (62) of the battery housings (23) at a distance which is fixed, at least during the operation of the equipping station (4), from the first extendable slider (30).

3. The equipping station according to claim 2,
**characterized in that**
the distance between the first and the second extendable slider (30, 33) is equal to the distance between the equipping positions of the first and the second equipping section (21, 65).

4. The equipping station according to any one of the preceding claims,
**characterized in that**
the first and/or the second extendable slider (30, 33) is designed to move the battery housing (23) from the feed section (20) into the equipping section (21), from the equipping section (21) into the discharge section (22) and/or to horizontally position a battery housing (23) at least in the equipping section (21).

5. The equipping station according to any one of the preceding claims,
**characterized in that**
the feed section (20) and/or the discharge section (22) comprise at least one conveyer belt and at least one extendable stopper (27, 29, 270, 271) is provided in the region of the conveyer belt for the defined stopping of a battery housing (23) at a desired position.

6. The equipping station according to any one of the preceding claims,
**characterized in that**
the base part (24) is designed to be rotatable about the vertical axis of supplied battery housings (23).

7. The equipping station according to claim 6,
**characterized in that**
the base part (24) is connected to a circular rotary indexing table with a 180° incrementation.

8. The equipping station according to any one of the preceding claims,
**characterized in that**
the first extendable slider (30) is designed to move a battery housing (23) from the feed section (20) into the first equipping section (21) and a third extendable slider (34) is designed to move an equipped battery housing (61) from the first equipping section (21) into the discharge section (22).

9. The equipping station according to any one of the preceding claims,
**characterized in that**
the first and/or the second equipping section (21, 65) has at least one extendable clamping cylinder (25, 26) in the region of the base part (24) to fix a battery housing (23) between the clamping cylinder (25, 26) and a counter bearing or between the clamping cylinders (25, 26).

10. An equipping unit for equipping and fitting motor vehicle battery housings (23, 61) comprising at least four processing stations (1, 2, 3, 4) arranged around a lifting-rotary table (5), wherein unprocessed electrode plate sets are supplied and aligned, and if appropriate bent, with respect to their contact lugs at a first processing station (1), wherein the contact lugs are provided with flux, galvanized and again provided with flux as needed at a second processing station (2), wherein electrical connections between the electrode plates are produced by casting on lead compounds, and pole shafts are cast on in a mold at a third processing station (3), and wherein a fourth processing station (4) is designed in accordance with any one of the preceding claims, wherein the electrode plate sets can be guided by means of the lifting-rotary table (5) from the first to the second, from the second to the third, and from the third to the fourth processing station.

11. A method for equipping motor vehicle battery housings (23, 61) with electrode plate sets (40) using an equipping station (4) according to any one of claims 1 to 9,
**characterized in that**
the first extendable slider (30) is initially positioned in retracted state relative to a battery housing (23) to be displaced, the slider (30) is then extended and moved at low speed until coming into contact with a battery housing (23), is then moved at higher speed in a horizontal displacement direction (62) of the battery housing (23), and is stopped once the desired position of the battery housing (23) is reached.

## Revendications

1. Station de garnissage (4) pour garnir des boîtiers de batterie de véhicule automobile (23, 61) avec des jeux de plaques électrodes (41) pour la fabrication d'une batterie de véhicule automobile, dans laquelle la station de garnissage (4) comprend au moins un tronçon d'amenée (20) pour des boîtiers de batterie non garnis (23), au moins un tronçon d'enlèvement (22) pour des boîtiers de batterie garnis (61), au moins un dispositif d'amenée de jeux de plaques électrodes (40), et au moins un premier tronçon de garnissage (21) agencé entre le tronçon d'amenée (20) et le tronçon d'enlèvement (22), dans lequel des jeux de plaques électrodes (41) amenés au moyen du dispositif d'amenée de jeux de plaques électrodes (40) sont mis en place dans le boîtier de batterie (23), dans laquelle le premier tronçon de garnissage (21) comprend une partie de fond (24) qui sert de surface de pose pour le boîtier de batterie (23) lors de l'opération de mise en place des jeux de plaques électrodes (41), **caractérisée en ce que** la partie de fond (24) est réalisée sans dispositif de convoyage pour le boîtier de batterie (23), et la station de garnissage (4) comprend au moins un premier poussoir (30) rétractable et déployable perpendiculairement à une direction de translation horizontale (82) du boîtier de batterie (23), au moyen duquel un boîtier de batterie (23) est déplaçable horizontalement au moins sur la partie de fond (24) dans l'état déployé du premier poussoir (30).

2. Station de garnissage selon la revendication 1, **caractérisée en ce qu'**il est prévu un second tronçon de garnissage (65) dans lequel peut être exécuté un garnissage de boîtiers de batterie (23) avec des jeux de plaques électrodes (41) simultanément à un garnissage de boîtiers de batterie (23) avec des jeux de plaques électrodes (41) dans le premier tronçon de garnissage (21), ledit second tronçon de garnissage (65) étant agencé entre le premier tronçon de garnissage (21) et le tronçon d'enlèvement (22), et il est prévu un second poussoir déployable (33) qui est agencé, dans la direction de translation (62) des boîtiers de batterie (23), à une distance fixe, au moins en fonctionnement de la station de garnissage (4), par rapport au premier poussoir déployable (30).

3. Station de garnissage selon la revendication 2, **caractérisée en ce que** la distance entre le premier et le second poussoir déployable (30, 33) est égale à la distance entre les positions de garnissage du premier et du second tronçon de garnissage (21, 65).

4. Station de garnissage selon l'une des revendications précédentes, **caractérisée en ce que** le premier et/ou le second poussoir déployable (30, 33) est conçu pour déplacer le boîtier de batterie (23) depuis le tronçon d'amenée (20) jusque dans le tronçon de garnissage (21), depuis le tronçon de garnissage (21) jusque dans le tronçon d'enlèvement (22), et/ou pour le positionnement horizontal d'un boîtier de batterie (23) au moins dans le tronçon de garnissage (21).

5. Station de garnissage selon l'une des revendications précédentes, **caractérisée en ce que** le tronçon d'amenée (20) et/ou le tronçon d'enlèvement (22) comprend au moins une bande de convoyage et **en ce qu'**il est prévu dans la région de la bande de convoyage au moins un arrêt déployable (27, 29, 270, 271) pour maintenir de façon définie un boîtier de batterie (23) dans une position souhaitée.

6. Station de garnissage selon l'une des revendications précédentes, **caractérisée en ce que** la partie de fond (24) est réalisée en rotation autour de l'axe vertical des boîtiers de batterie amenés (23).

7. Station de garnissage selon la revendication 6, **caractérisée en ce que** la partie de fond (24) est reliée à une table tournante circulaire avec une amplitude de pas de 180°.

8. Station de garnissage selon l'une des revendications précédentes, **caractérisée en ce que** le premier poussoir déployable (30) est conçu pour déplacer un boîtier de batterie (23) depuis le tronçon d'amenée (20) jusque dans le premier tronçon de garnissage (21), et un troisième poussoir déployable (34) est conçu pour déplacer un boîtier de batterie garnie (61) depuis le premier tronçon de garnissage (21) jusque dans le tronçon d'enlèvement (22).

9. Station de garnissage selon l'une des revendications précédentes, **caractérisée en ce que** le premier et/ou le second tronçon de garnissage (21, 65) comprend, dans la région de la partie de fond (24), au moins un cylindre de serrage déployable (25, 26) pour fixer un boîtier de batterie (23) entre le cylindre de serrage (25, 26) et une monture antagoniste, ou entre les cylindres de serrage (25, 26).

10. Installation de garnissage pour garnir est équipée des boîtiers de batterie de véhicule automobile (23, 61), comprenant au moins quatre station de travail (1, 2, 3, 4), qui sont agencés tout autour d'une table relevable/rotative (5), dans laquelle des jeux de plaques électrodes non oeuvrées sont amenés à une première station de travail (1) et orientés pour ce qui concerne leurs pattes de contact et le cas échéant recourbés, dans laquelle les pattes de contact sont dotées de flux dans une seconde station de travail (2), zinguées et le cas échéant à nouveau dotées de flux, dans laquelle des connexions électriques sont réalisées entre les plaques électrodes dans une troisième station de travail (3) par coulée de composé au plomb et des tiges polaires sont coulées dans un moule de coulée et dans laquelle une quatrième station de travail (4) est réalisée selon l'une des revendications précédentes, les jeux de plaques électrodes pouvant être amenés via la table relevable/rotative (5) de la première à la seconde station de travail, de celle-ci à la troisième et de celle-ci à la quatrième station de travail.

11. Procédé pour le garnissage de boîtiers de batterie de véhicule automobile (23, 61) avec des jeux de plaques électrodes (40) en utilisant une station de garnissage (4) selon l'une des revendications 1 à 9, **caractérisé en ce que** le premier poussoir déployable (30) est positionné tout d'abord dans l'état rétracté par rapport à un boîtier de batterie (23) à déplacer, le poussoir (30) est alors déployé et déplacé à faible vitesse jusqu'à venir en contact avec un boîtier de batterie (23), puis ensuite déplacé à vitesse plus élevée en direction de translation horizontale (62) du boîtier de batterie (23) et, après avoir atteint la position souhaitée du boîtier de batterie (23), il est arrêté.
